# FASCICULE DE BREVET EUROPEEN

(11) **EP 3 114 816 B1**
(45) Date de publication et mention de la délivrance du brevet: **27.12.2017**
(21) Numéro de dépôt: 15713208.5
(22) Date de dépôt: 27.02.2015
(51) Int. Cl.: H04L 29/08, G06F 9/44, G06F 9/00, H04L 12/40, H04L 12/24, B60R 16/02

(54) **PROCÉDÉ ET SYSTÈME POUR LE TÉLÉCHARGEMENT ACCÉLÉRÉ DE DONNÉES**
VERFAHREN UND SYSTEME ZUM BESCHLEUNIGTEN HERUNTERLADEN VON DATEN
METHOD AND SYSTEM FOR THE ACCELERATED DOWNLOADING OF DATA

(30) Priorité: 07.03.2014 FR 1451879
(43) Date de publication de la demande: 11.01.2017
(73) Titulaire: PSA Automobiles SA, 78300 Poissy (FR)
(72) Inventeur: SCHMIDT, Pierre, F-95240 Cormeilles en Parisis (FR); LOPEZ, Thierry, F-78700 Conflans Ste Honorine (FR)
(74) Mandataire: Jeannin, Laurent Jean-Pierre
(86) Numéro de dépôt international: PCT/FR2015/050489
(87) Numéro de publication internationale: WO 2015/136179

(56) Documents cités:
- KR-B1- 100 792 422
- US-A1- 2004 254 689
- US-A1- 2007 081 548
- TRAIAN POP ET AL: "Bus Access Optimisation for FlexRay-based Distributed Embedded Systems", DESIGN, AUTOMATION & TEST IN EUROPE CONFERENCE & EXHIBITION : NICE, FRANCE, 16 - 20 APRIL 2007, IEEE SERVICE CENTER, PISCATAWAY, NJ, 16 avril 2007 (2007-04-16), pages 1-6, XP031092082, ISBN: 978-3-9810801-2-4
- INSEOK PARK ET AL: "FlexRay Network Parameter Optimization Method for Automotive Applications", IEEE TRANSACTIONS ON INDUSTRIAL ELECTRONICS, IEEE SERVICE CENTER, PISCATAWAY, NJ, USA, vol. 58, no. 4, 30 avril 2011 (2011-04-30) , pages 1449-1459, XP011350331, ISSN: 0278-0046, DOI: 10.1109/TIE.2010.2049713

## Description

L'invention concerne un procédé et un système de téléchargement d'au moins un fichier dans un ou plusieurs calculateurs.

Dans la suite de cette description, lorsque le fichier à télécharger contient des instructions ou le code exécutable d'un logiciel, on parle également de téléchargement d'un logiciel.

La complexité croissante de la fonction électronique embarquée entraîne une multiplication des boîtiers électroniques (ou calculateurs) montés sur les véhicules automobiles. Afin de limiter la diversité qui en résulte, il a été décidé de pratiquer un téléchargement de ces calculateurs dans le flux de production des véhicules. L'opération est réalisée moyennant un outil débarqué qui se connecte sur la prise diagnostic du véhicule et permet de programmer dans la mémoire du ou des calculateurs le logiciel qui assure un fonctionnement conforme du véhicule produit en prenant en compte les caractéristiques (motorisation, options) propres à ce véhicule. La communication entre l'outil de production et le ou les calculateurs fait usage de la technologie CAN 500kbps permettant de transférer les données à programmer.

On connaît déjà dans l'état de la technique des procédés et des systèmes de téléchargement de fichiers dans des calculateurs embarqués à bord de véhicules automobiles, tels que ceux décrits par exemple dans le document FR-A-2719924. Ce document détaille les différentes étapes successives de la procédure utilisée lors de l'assemblage des véhicules ou dans le réseau après-vente d'un constructeur, lors de la correction d'une prestation par échange de fichier.

Cette fonction de téléchargement a été optimisée par la suite afin de la rendre compatible avec des exigences du flux de fabrication des véhicules, dans lequel le téléchargement d'un ensemble de calculateurs d'un même véhicule est réalisé simultanément. On peut par exemple se reporter au document FR-A-2825813 qui décrit cette optimisation.

On connait aussi par le document US2004254689 un procédé pour la programmation d'une pluralité d'unités centrales électroniques (ECU) pour commander les appareils dans un véhicule automobile. Un module hôte positionné à l'intérieur du véhicule est couplé à chacun des calculateurs. Le module hôte stocke les programmes de logiciels à télécharger à l'ECU.

Cependant, l'accueil de nouvelles fonctionnalités embarquées et de règlements toujours plus complexes poussent à des tailles mémoires embarquées et des besoins en temps de téléchargement de ces mémoires de plus en plus grands.

Cette augmentation du volume des données augmente sans cesse ce qui rend le téléchargement incompatible avec le temps imparti à la réalisation de cette opération dans le flux de production. Le temps alloué au téléchargement ne peut pas être allongé sans une réorganisation importante des usines de production.

Il existe donc un besoin de calculateurs et de système permettant d'effectuer des téléchargements dans le temps imparti à la réalisation de cette opération dans le flux principal d'une usine d'assemblage.

Le but de l'invention est donc de résoudre ces problèmes et de proposer une solution pour le téléchargement, dans des calculateurs, d'au moins un fichier dans un délai compatible avec le flux de production d'une usine. L'invention est définie par les revendications indépendantes 1 et 5-7.

Elle propose plus précisément à cet effet un procédé pour le téléchargement de données vers au moins un calculateur de véhicule, ledit calculateur étant adapté pour exécuter un logiciel applicatif, caractérisé en qu'il comporte des étapes de :
- Réception d'une requête de téléchargement par l'intermédiaire du réseau,
- Configuration, du réseau dans un premier mode adapté au téléchargement de données,
- Téléchargement des données vers le calculateur par l'intermédiaire du réseau,
- Reconfiguration, du réseau dans un deuxième mode adapté à l'exécution du logiciel applicatif.

La configuration du réseau dans le premier mode, adapté au téléchargement de données, permet de télécharger plus rapidement les données vers le calculateur. Ainsi, la durée du téléchargement d'un calculateur est compatible avec le flux de production d'une usine de montage, même avec un important volume de données à télécharger.

La configuration du réseau dans le deuxième mode, adapté à l'exécution du logiciel applicatif, permet d'assurer le fonctionnement du véhicule une fois que le calculateur est téléchargé.

C'est à partir de ce second mode (qui est en fait la configuration par défaut du réseau R) qu'il est possible de basculer le calculateur dans le premier mode, adapté au téléchargement.

La reconfiguration du réseau d'un mode à l'autre se fait par le réseau lui-même et ne nécessite pas de technologie auxiliaire.

Selon une caractéristique de l'invention, le calculateur accède au réseau au moyen d'un multiplexage temporel définissant des cycles de communication.

Selon une autre caractéristique de l'invention, l'étape de configuration du réseau dans le premier mode et l'étape de configuration du réseau dans le deuxième mode comporte la modification de la durée des cycles de communication.

Selon une autre caractéristique de l'invention, la durée des cycles de communication dans le premier mode est inférieure à la durée des cycles de communication dans le deuxième mode.

Selon une autre caractéristique de l'invention, le calculateur comportant, en outre une mémoire dans laquelle sont stockés un logiciel applicatif et un chargeur d'amorçage, le procédé comporte en outre une étape de vérification de l'intégrité des données téléchargées et si les données téléchargées sont intègres, l'exécution par le calculateur du logiciel applicatif sinon l'exécution par le calculateur du chargeur d'amorçage.

Selon une autre caractéristique de l'invention, le procédé comporte en outre des étapes de :
- Ouverture d'une session de diagnostic, avant l'étape de téléchargement,
- Ouverture d'une session par défaut après l'étape de téléchargement.

Selon une autre caractéristique de l'invention, le procédé comporte en outre une étape de lancement d'un service autorisant la modification de la configuration du réseau.

L'invention concerne aussi un calculateur de véhicule automobile relié à un réseau et comportant des moyens de réception d'une requête de téléchargement par l'intermédiaire du réseau, caractérisé en ce qu'il comporte en outre :
- des moyens de modification de la configuration du réseau,
- des moyens de mise en oeuvre du procédé de téléchargement selon l'invention.

L'invention concerne aussi un véhicule automobile caractérisé en ce qu'il comporte au moins un calculateur selon l'invention.

L'invention concerne aussi un système pour le téléchargement de données comportant un outil de téléchargement, caractérisé en ce qu'il comporte en outre un calculateur selon l'invention et une passerelle reliant l'outil de téléchargement au calculateur, la passerelle étant reliée au calculateur par l'intermédiaire d'un réseau, le système étant apte à fonctionner selon un premier mode dans lequel l'outil de téléchargement télécharge des données vers le calculateur, et selon un deuxième mode dans lequel le calculateur exécute un logiciel applicatif correspondant aux données téléchargées selon le premier mode.

D'autres caractéristiques et avantages de l'invention apparaîtront à l'examen de la description détaillée ci-après, et des dessins annexés, sur lesquels :
- La figure 1 représente un système de téléchargement d'au moins un fichier vers un ou plusieurs calculateurs ;
- La figure 2 représente un logigramme illustrant le procédé de téléchargement de données de l'outil vers le premier calculateur.

Les dessins annexés pourront non seulement servir à compléter l'invention, mais aussi contribuer à sa définition, le cas échéant.

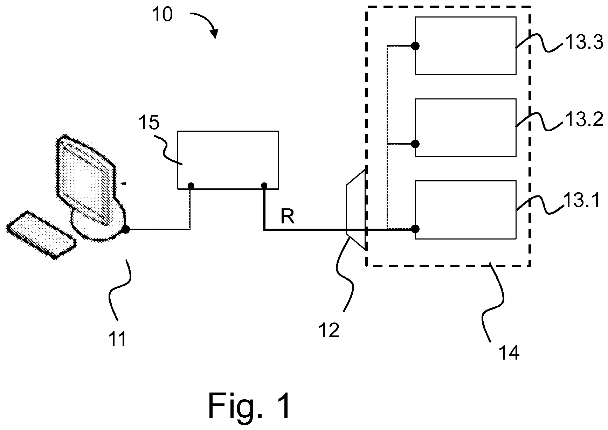

La figure 1 représente un système de téléchargement d'au moins un fichier vers un ou plusieurs calculateurs.

Par exemple, le fichier est un fichier contenant le code exécutable d'un logiciel. Ce code exécutable contient des instructions exécutables par les calculateurs dans lequel ce fichier est téléchargé.

Le système de téléchargement 10 selon l'invention comporte :
- un outil de téléchargement 11 par exemple de type ordinateur personnel (ou PC pour Personal Computer),
- un ou plusieurs calculateurs 13.1, 13.2, 13.3 intégrés dans un véhicule 14 ou disponibles « sur table »
- un réseau de communication R auquel chacun des calculateurs 13.1, 13.2, 13.3 est relié.

Le réseau R (par exemple un réseau de communication asynchrone) est un réseau (de communication) chargé de transmettre des trames T ayant un format donné et présentant un certain débit.

Dans ce qui suit, on considère à titre d'exemple non limitatif que le réseau R est de type FlexRay (réseau dit déterministe (ou « time-trigger »)). Mais, l'invention n'est pas limitée à ce type de réseau de communication. Elle concerne en effet tous réseaux de communication asynchrones de type différents et présentant des débits différents.

Par ailleurs, on considère dans ce qui suit, à titre d'exemple non limitatif, que le réseau R est embarqué dans un véhicule automobile. Mais l'invention n'est pas limitée à ce type de système. Elle concerne en effet tout type de système, et notamment les aéronefs.

Le réseau R comprend classiquement des équipements S2j (j = 1 à M, M ≥ 2) qui sont connectés en parallèle à un bus multiplexés. Il est rappelé que dans un réseau de type FlexRay l'accès des équipements (S2j) au bus multiplexé se fait selon le mode dit TDMA (multiplexage temporel), chaque équipement (S2j) disposant au cours de chaque cycle d'au moins une tranche temporelle allouée, pendant laquelle il est autorisé à émettre des données (éventuellement dans une (seconde) trame T2).

Plus précisément, l'accès au bus est partagé, périodiquement, entre deux segments : le segment statique (pour les flux périodiques) et le segment dynamique (pour les flux apériodiques).

Dans le segment statique, l'accès se fait suivant un mécanisme TDMA: (Time-Division Multiple Access) : le temps est partagé entre les différents noeuds du réseau. C'est uniquement pendant le (ou les) intervalle(s) de temps alloué(s) que l'un des noeuds peut transmettre un message, à destination de tous les autres.

Dans le segment dynamique, l'accès se fait suivant le FDMA: Flexible TDMA, qui consiste à gérer des priorités par temps d'attente.

On appelle cycle de communication une durée (comptée en MacroTick - unité de temps liée à la fréquence d'horloge des calculateurs) et divisée en au moins deux zones logiques consécutives du point de vue temporel : le segment statique et le segment dynamique.

Selon une caractéristique de l'invention, le système de téléchargement comporte des moyens de paramétrer le réseau R et en particulier de modifier la durée des cycles de communication.

Les calculateurs dans lesquels le ou les fichiers doivent être téléchargés sont des calculateurs destinés à être montés dans un véhicule tel qu'un véhicule automobile. Ici, le véhicule automobile est une voiture.

Par exemple, ces calculateurs peuvent être des calculateurs de contrôle moteur, des calculateurs de boîte de vitesses, des calculateurs d'ABS (Antiblock Breaking System), des calculateurs de suspensions ou des calculateurs d'habitacle.

Pour simplifier la figure 1, seuls trois calculateurs 13.1 à 13.3 sont représentés. Par exemple, les calculateurs 13.1 à 13.3 sont respectivement un calculateur de contrôle moteur, un calculateur d'habitacle et un calculateur ABS.

Ces calculateurs comportent des caractéristiques communes décrites ci-après.

Chacun des calculateurs comprend une mémoire non volatile réinscriptible. Par exemple, cette mémoire est une mémoire NVRAM (Non Volatil Random Access Memory). A titre d'illustration, il s'agit d'une mémoire connue sous la terminologie de « mémoire flash » ou « flash Eprom ». Cette mémoire contient des fichiers. Ces fichiers peuvent contenir des instructions exécutables par le calculateur. Ici, il s'agit d'instructions pour contrôler le moteur d'un véhicule dans le cas du calculateur moteur. C'est ce fichier exécutable (aussi appelé applicatif) qui correspond au logiciel pouvant être reprogrammé en usine de montage ou en service après-vente.

La mémoire du calculateur comporte aussi un chargeur d'amorçage (ou bootloader selon l'expression anglo-saxonne). Le chargeur d'amorçage est un logiciel permettant d'initialiser le calculateur et qui contient l'intégralité ou une partie de la procédure de téléchargement.

Chacun des calculateurs comprend également au moins un émetteur-récepteur (ou transceiver selon l'expression anglo-saxonne) permettant de raccorder ce calculateur à différents équipements du véhicule dans lequel il est destiné à être monté. En particulier, cet émetteur-récepteur est destiné à être raccordé au réseau R.

De façon avantageuse, le véhicule 14 comporte en outre un connecteur 12 comportant une pluralité de broches. Un ensemble de broches est relié au réseau R.

L'outil de téléchargement 11 comporte un calculateur programmable apte à exécuter des instructions enregistrées dans une mémoire. A cet effet, le calculateur est raccordé à la mémoire contenant des instructions pour l'exécution du procédé de téléchargement selon l'invention.

L'outil de téléchargement 11 est connecté à un port d'entrée/sortie de la passerelle 15 via une liaison Ethernet car elle permet d'alimenter le réseau Flexray avec un débit élevé (10Mbps ou mégabits par seconde). De plus, cette technologie se justifie au travers de la nature de l'outil qui est un PC renforcé mécaniquement et dispose d'un port Ethernet en standard évitant l'intégration d'une carte de communication supplémentaire. La passerelle 15 est elle-même reliée à un port d'entrée/sortie du véhicule 14 via une liaison Flexray pour la mise à jour des calculateurs.

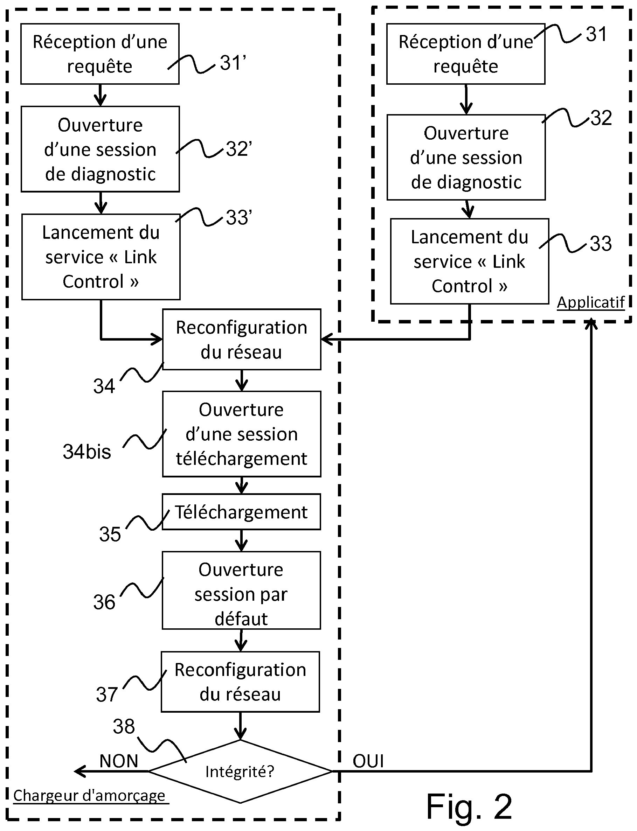

La figure 2 représente un logigramme illustrant le procédé de téléchargement de données de l'outil 11 vers le premier calculateur 13.1 via le réseau R.

Le mécanisme permettant la mise en situation puis le téléchargement via le réseau comprend les étapes : 31/31', 32/32', 33/33', 34, 35, 36, 37 et 38.

L'étape 31 correspond à la réception par le calculateur 13.1 de la requête demandant l'ouverture d'une session de diagnostic étendue, lorsque celui-ci exécute son logiciel applicatif.

L'ouverture 32 de la session de diagnostic étendu permet d'autoriser la réception de requêtes associées au service dit « Link Control » (étape 33). Ce service permet de modifier les caractéristiques de la communication entre l'outil 11 et le calculateur 13.1 afin d'accroître la bande passante (débit) pour répondre à des cas d'utilisation tel que par exemple le téléchargement.

L'étape 33 réalise aussi un basculement dans le bootloader, avec comme point d'entrée une fonction permettant la reconfiguration du réseau Flexray 34. Le réseau R est configuré dans un premier mode, optimisé pour le téléchargement. En particulier, la durée des cycles de communication est réduite.

Chacun des calculateurs 13.1, 13.2, 13.3 comporte en mémoire une table définissant des paramètres de fonctionnement du réseau Flexray et en particulier la durée des cycles de communications. Cette table est modifiée au cours de l'étape de configuration du réseau.

Le raccourcissement du cycle de communication permet d'augmenter sa fréquence, donc de donner plus souvent la parole à l'outil de téléchargement 11 et aux calculateurs 13.1, 13.2 et 13.3 ce qui augmente le débit. En revanche, les cycles courts ne sont pas adaptés à l'exécution du logiciel applicatif d'où la nécessite de reconfigurer le réseau R dans le second mode à l'issu du téléchargement.

Par exemple dans le premier mode de configuration la durée des cycles est 1,7 ms et dans le deuxième mode de configuration la durée des cycles est de 5 ms.

Après l'étape 34, la communication entre l'outil de téléchargement 11, et les calculateurs 13.1, 13.2, 13.3 via le réseau présente un débit supérieur.

L'étape 34 bis permet de basculer en « session de reprogrammation » ce qui permet de télécharger le calculateur en transmettant les requêtes outil-calculateur par le réseau (étape 35). Il devient alors possible de reprogrammer le calculateur en transmettant les requêtes outil-calculateur permettant de dérouler la procédure de téléchargement et de reprogrammation.

L'étape 36 est exécutée consécutivement à la réception de la requête (DSC 01) de confirmation de fin de téléchargement et permet à l'issue du téléchargement de 1) remettre le calculateur en session par défaut, 2) déclencher un RESET entraînant la réinitialisation complète du calculateur une exécution de l'étape 37 provoquant une reconfiguration du réseau R. Le réseau R est reconfiguré dans un deuxième mode, optimisé pour l'exécution du logiciel application. En particulier, la durée des cycles de communication est allongée.

Le passage du premier au deuxième mode se fait par modification des tables de configuration de chacun des calculateurs 13.1, 13.2, 13.3.

L'étape 38 permet de vérifier l'intégrité du logiciel « client » (applicatif) et en cas d'issue favorable de basculer du bootloader vers l'applicatif nouvellement téléchargé.

Le téléchargement peut aussi être réalisé lorsque le calculateur exécute son chargeur d'amorçage ce qui se produit qu'il n'y a pas d'applicatif valide en mémoire. Dans ce cas les étapes 31', 32' et 33' sont exécutées à la place des étapes 31, 32 et 33.

L'étape 31' correspond à la réception par le calculateur 13.1 de la requête demandant l'ouverture d'une session de diagnostic étendue, lorsque celui-ci exécute son chargeur d'amorçage.

L'ouverture 32' de la session de diagnostic étendu permet d'autoriser la réception de requêtes associées au service dit « Link Control » (étape 33'). Contrairement à l'étape 33, l'étape 33' ne réalise pas de basculement dans le chargeur d'amorçage, puisque celui-ci est déjà en cours d'exécution.

## Revendications

1. Procédé pour le téléchargement de données vers au moins un calculateur (13.1) de véhicule (14) par l'intermédiaire d'un réseau (R), ledit calculateur (13.1) étant adapté pour exécuter un logiciel applicatif, le calculateur (13.1) accédant au réseau (R) au moyen d'un multiplexage temporel définissant des cycles de communication, le procédé étant tel qu'il comporte des étapes de :
- Réception (31, 31') d'une requête de téléchargement par l'intermédiaire du réseau (R),
- Configuration (34) du réseau (R) dans un premier mode de fonctionnement adapté au téléchargement de données et privilégiant le débit du réseau (R),
- Téléchargement (35) des données vers le calculateur (13.1) par l'intermédiaire du réseau (R),
- Reconfiguration (37) du réseau (R) dans un deuxième mode de fonctionnement adapté à l'exécution du logiciel applicatif. et tel que l'étape de configuration (34) du réseau (R) dans le premier mode et l'étape de reconfiguration (37) du réseau (R) dans le deuxième mode comportent la modification de la durée des cycles de communication, la durée des cycles de communication dans le premier mode étant inférieure à la durée des cycles de communication dans le deuxième mode.

2. Procédé pour le téléchargement selon la revendication précédente, **caractérisé en ce que**, le calculateur (13.1) comportant, en outre une mémoire dans laquelle sont stockés un logiciel applicatif et un chargeur d'amorçage, le procédé comporte en outre une étape de vérification (38) de l'intégrité des données téléchargées et si les données téléchargées sont intègres, l'exécution par le calculateur du logiciel applicatif sinon l'exécution par le calculateur du chargeur d'amorçage.

3. Procédé pour le téléchargement selon l'une des revendications précédentes, **caractérisé en ce qu'**il comporte en outre des étapes de :
- Ouverture d'une session de diagnostic (32, 32'), avant l'étape de téléchargement (35),
- Ouverture d'une session par défaut (36) après l'étape de téléchargement (35).

4. Procédé pour le téléchargement selon l'une des revendications précédentes, **caractérisé en ce qu'**il comporte en outre une étape de lancement d'un service (33, 33') autorisant la modification de la configuration du réseau.

5. Calculateur de véhicule (13.1) automobile apte à être relié à un réseau (R) et comportant des moyens de réception d'une requête de téléchargement par l'intermédiaire du réseau (R), le calculateur (13.1) étant apte à accéder au réseau (R) au moyen d'un multiplexage temporel définissant des cycles de communication, le calculateur étant tel qu'il comporte en outre :
- Des moyens de configuration (34), du réseau (R) dans un premier mode de fonctionnement adapté au téléchargement de données et privilégiant le débit du réseau (R),
- Des moyens de téléchargement (35) des données vers le calculateur (13.1) par l'intermédiaire du réseau (R),
- Des moyens de reconfiguration (37), du réseau (R) dans un deuxième mode de fonctionnement adapté à l'exécution du logiciel applicatif. et tel que les moyens de configuration (34) du réseau (R) dans le premier mode et les moyens de reconfiguration (37) du réseau (R) dans le deuxième mode sont aptes à modifier la durée des cycles de communication, la durée des cycles de communication dans le premier mode étant inférieure à la durée des cycles de communication dans le deuxième mode.

6. Véhicule automobile (14) tel qu'il comporte au moins un calculateur (13.1) selon la revendication précédente.

7. Système pour le téléchargement de données comportant un outil de téléchargement (11), tel qu'il comporte en outre un calculateur (13.1) selon la revendication 5 et une passerelle (15) reliant l'outil de téléchargement (11) au calculateur (13.1), la passerelle (15) étant reliée au calculateur (13.1) par l'intermédiaire d'un réseau (R), le système étant apte à fonctionner selon un premier mode dans lequel l'outil de téléchargement (11) est apte à télécharger des données vers le calculateur (13.1), et selon un deuxième mode dans lequel le calculateur (13.1) est apte à exécuter un logiciel applicatif correspondant aux données téléchargées selon le premier mode.

## Patentansprüche

1. Verfahren zum Herunterladen von Daten auf mindestens einen Computer (13.1) eines Fahrzeugs (14) über ein Netzwerk (R), wobei der Computer (13.1) geeignet ist, um eine Anwendungssoftware auszuführen, wobei der Computer (13.1) auf das Netzwerk (R) mittels eines Zeitmultiplexens zugreift, das Kommunikationszyklen definiert, wobei das Verfahren die folgenden Schritte umfasst:
- Empfangen (31, 31') einer Herunterladeanfrage über das Netzwerk (R),
- Konfiguration (34) des Netzwerks (R) in einem ersten Betriebsmodus, der an das Herunterladen von Daten angepasst ist und dem Durchsatz des Netzwerks (R) Vorrang einräumt,
- Herunterladen (35) der Daten auf den Computer (13.1) über das Netzwerk (R),
- Neukonfiguration (37) des Netzwerks (R) in einem zweiten Betriebsmodus, der an die Ausführung der Anwendungssoftware angepasst ist, und
wobei der Konfigurationsschritt (34) des Netzwerks (R) in dem ersten Betriebsmodus und der Konfigurationsschritt (37) des Netzwerks (R) in dem zweiten Modus die Änderung der Dauer der Kommunikationszyklen umfassen, wobei die Dauer der Kommunikationszyklen in dem ersten Modus kleiner ist als die Dauer der Kommunikationszyklen in dem zweiten Modus.

2. Herunterladeverfahren nach dem vorhergehenden Anspruch, **dadurch gekennzeichnet, dass** der Computer (13.1) außerdem einen Speicher umfasst, in dem eine Anwendungssoftware und ein Bootlader gespeichert sind,
wobei das Verfahren außerdem einen Prüfschritt (38) der Vollständigkeit der heruntergeladenen Daten umfasst, und, falls die heruntergeladenen Daten vollständig sind, der Computer die Softwareanwendung ausführt, anderenfalls der Computer den Bootlader ausführt.

3. Herunterladeverfahren nach einem der vorhergehenden Ansprüche, **dadurch gekennzeichnet, dass** es außerdem die folgenden Schritte umfasst:
- Öffnen einer Diagnosesession (32, 32') vor dem Herunterladeschritt (35),
- Öffnen einer Standardsession (36) nach dem Herunterladeschritt (35).

4. Herunterladeverfahren nach einem der vorhergehenden Ansprüche, **dadurch gekennzeichnet, dass** es außerdem einen Schritt des Startens eines Dienstes (33, 33') umfasst, der das Ändern der Konfiguration des Netzwerks gestattet.

5. Kraftfahrzeugcomputer (13.1), der geeignet ist, um mit einem Netzwerk (R) verbunden zu sein und Mittel zum Empfangen einer Herunterladeanfrage über das Netzwerk (R) umfasst, wobei der Computer (13.1) angepasst ist, um auf das Netzwerk (R) mittels eines Zeitmultiplexens, das Kommunikationszyklen definiert, zuzugreifen,
wobei der Computer außerdem Folgendes umfasst:
- Mittel zum Konfigurieren (34) des Netzwerks (R) in einem ersten Betriebsmodus, der an das Herunterladen von Daten angepasst ist und dem Durchsatz des Netzwerks (R) Vorrang einräumt,
- Mittel zum Herunterladen (35) der Daten auf den Computer (13.1) über das Netzwerk (R),
- Mittel (37) zum Neukonfigurieren des Netzwerks (R) in einem zweiten Betriebsmodus, der an das Ausführen der Anwendungssoftware angepasst ist,
wobei die Mittel (34) zum Konfigurieren des Netzwerks (R) in dem ersten Betriebsmodus und die Mittel (37) zum Neukonfigurieren des Netzwerks (R) in dem zweiten Modus angepasst sind, um die Dauer der Kommunikationszyklen zu ändern, wobei die Dauer der Kommunikationszyklen bei dem ersten Modus kleiner ist als die Dauer der Kommunikationszyklen bei dem zweiten Modus.

6. Kraftfahrzeug, das mindestens einen Computer (13.1) nach dem vorhergehenden Anspruch umfasst.

7. System zum Herunterladen von Daten, das ein Herunterladetool (11) umfasst, das außerdem einen Computer (13.1) nach Anspruch 5 und ein Gateway (15), das das Herunterladetool (11) mit dem Computer (13.1) verbindet, umfasst, wobei das Gateway (15) mit dem Computer (13.1) über ein Netzwerk (R) verbunden ist, wobei das System geeignet ist, um gemäß einem ersten Modus zu arbeiten, bei dem das Herunterladetool (11) geeignet ist, um Daten auf den Computer (13.1) herunterzuladen, und gemäß einem zweiten Modus, bei dem der Computer (13.1) geeignet ist, um eine Anwendungssoftware auszuführen, die den gemäß dem ersten Modus heruntergeladenen Daten entspricht.

## Claims

1. A method for the downloading of data to at least one computer (13.1) of a vehicle (14) through a network (R), said computer (13.1) being adapted to running application software, the computer (13.1) accessing the network (R) by means of time-division multiplexing defining communications cycles, the method being such that it comprises steps of:
- reception (31, 31') of a download request through the network (R),
- configuration (34) of the network (R) in a first operating mode adapted to the downloading of data and promoting the speed of the network (R),
- downloading (35) of the data to the computer (13.1) through the network (R),
- reconfiguration (37) of the network (R) into a second operating mode adapted to running the application software,
and such that the step for configuration (34) of the network (R) in the first mode and the step for reconfiguration (37) of the network (R) in the second mode comprise the changing of the duration of the communication cycles, the duration of the communication cycles in the first mode being less than the duration of the communication cycles in the second mode.

2. The method for downloading according to the preceding claim, **characterised in that**, the computer (13.1) also comprising a memory in which application software and a boot loader are stored, the method also comprises a step for verification (38) of the integrity of the downloaded data and if the downloading data have integrity, running by the computer of the application software, otherwise running by the computer of the boot loader.

3. The method for downloading according to any one of the preceding claims, **characterised in that** it also comprises steps of:
- opening a diagnostic session (32, 32') before the downloading step (35),
- opening a default session (36) after the downloading step (35).

4. The method for downloading according to any one of the preceding claims, **characterised in that** it also comprises a step for starting up a service (33, 33') authorising the changing of the configuration of the network.

5. A motor vehicle computer (13.1) suitable for being connected to a network (R) and comprising means for receiving a download request through the network (R), the computer (13.1) being suitable for accessing the network (R) by means of time-division multiplexing defining communication cycles, the computer being such that it also comprises:
- means for configuration (34) of the network (R) in a first operating mode adapted to the downloading of data and promoting the speed of the network (R),
- means for downloading (35) data to the computer (13.1) through the network (R),
- means for reconfiguration (37) of the network (R) in a second operating mode adapted to running the application software,
and such that the means for configuration (34) of the network (R) in the first mode and the means for reconfiguration (37) of the network (R) in the second mode are suitable for changing the duration of the communication cycles, the duration of communication cycles in the first mode being less than the duration of communication cycles in the second mode.

6. A motor vehicle (14) such that it comprises at least one computer (13.1) according to the preceding claim.

7. A system for the downloading of data comprising a downloading tool (11), such that it also comprises a computer (13.1) according to claim 5 and a gateway (15) connecting the downloading tool (11) to the computer (13.1), the gateway (15) being connected to the computer (13.1) through a network (R), the system being suitable for operating according to a first mode in which the downloading tool (11) is suitable for downloading data to the computer (13.1), and according to a second mode in which the computer (13.1) is suitable for running application software corresponding to the data downloaded according to the first mode.
